# EUROPEAN PATENT APPLICATION

(11) **EP 1 895 175 A2**
(43) Date of publication of application: **05.03.2008**
(21) Application number: 07114780.5
(22) Date of filing: 22.08.2007
(51) Int. Cl.: F16B 47/00

(54) **Suction cup**

(30) Priority: 28.08.2006 JP 2006230435
(71) Applicant: Sony Corporation, Minato-ku Tokyo 108-0075 (JP)
(72) Inventor: Takahashi, Shunichi, Tokyo 108-0075 (JP); Kawabata, Makoto, Tokyo 108-0075 (JP)
(74) Representative: Körber, Martin Hans

(57) **Abstract**

Herein disclosed a suction cup (10) including: a suction cup body (12) formed from an elastic material and having a surface on one side in the thickness direction thereof as a concave suction surface (18); and a spring element (16) provided as a part of the suction cup body (12), having a concave shape along the suction surface (18), and capable of elastic deformation such as to energize a central part of the suction surface away from a surface to be sucked in the condition where the suction surface (18) is in suction contact with the surface to be sucked.

## Description

### CROSS REFERENCES TO RELATED APPLICATIONS

The present invention contains subject matter related to Japanese Patent Application JP 2006-230435 filed with the Japan Patent Office on August 28, 2006, the entire contents of which being incorporated herein by reference.

### BACKGROUND OF THE INVENTION

### 1. Field of the Invention

The present invention relates to a suction cup (sucker).

### 2. Description of the Related Art

Suction cups for attaching goods to, for example, a wall in a room or to a dashboard in an automobile have been known.

Ordinarily, this kind of suction cup includes a single elastic member formed from a rubber, polyvinyl chloride or the like, and its surface on one side in the thickness direction thereof is made to be a suction surface to be put into suction contact with a surface to be sucked, while its surface on the other side is made to be a back surface.

In use of the suction cup, the suction surface is made to front on the surface to be sucked, a central part of the suction surface is pressed against the surface to be sucked, whereby a substantially vacuum condition is generate between the suction surface of the suction cup and the surface to be sucked, and the vacuum condition is maintained by the elasticity of the suction cup, so as to leave the suction cup in suction contact with the surface to be sucked (refer to Japanese Patent Laid-open No. Hei 11-193811 as Patent Document 1).

### SUMMARY OF THE INVENTION

Meanwhile, the suction cups according to the related art are weak in mechanical strength because they are each formed from a single elastic material such as a rubber and polyvinyl chloride. Therefore, when the suction cup is left to stand in a suction contact condition for a long time or is used in a high-temperature environment, the suction cup may be deformed in shape or loose elasticity, leading to a lowering in the adhering force thereof.

Thus, there is a need for a suction cup which is advantageous in enhancing the mechanical strength thereof.

In order to meet the above need, according to an embodiment of the present invention, there is provided a suction cup including: a suction cup body formed from an elastic material and having a surface on one side in the thickness direction thereof as a concave suction surface; and a spring element provided as a part of the suction cup body, having a concave shape along the suction surface, and capable of elastic deformation such as to energize a central part of the suction surface away from a surface to be sucked in the condition where the suction surface is in suction contact with the surface to be sucked.

According to embodiments of the present invention, the suction cup body is provided with the spring element, so that the elasticity of the spring element also acts on the suction cup body, in addition to the elasticity of the suction cup body itself, in the condition where the suction surface of the suction cup is in suction contact with the surface to be sucked. Therefore, the force tending to urge a central part of the suction cup body away from the surface to be sucked is augmented, whereby the degree of adhesion (suction contact) of the suction cup to the surface to be sucked is enhanced, and an accessory or the like is stably attached to the surface to be sucked through the suction cup.

### BRIEF DESCRIPTION OF THE DRAWINGS

FIG. 1A is a perspective view of a suction cup 10 according to a first embodiment of the present invention, and FIG. 1B is a sectional view of the same;
FIG. 2A is a perspective view of a spring element 16, and FIG. 2B is a sectional view of the spring element 16;
FIG. 3A is a perspective view of a spring element 16 according to a second embodiment of the present invention, FIG. 3B is a perspective view of a spring element 16 according to a third embodiment of the invention, and FIG. 3C is a perspective view of a spring element 16 according to a fourth embodiment of the invention;
FIG. 4A is a perspective view of a suction cup 10 according to a fifth embodiment of the present invention, FIG. 4B is a perspective view of a spring element 16 according to the fifth embodiment, and FIG. 4C is a plan view of the spring element 16 according to the fifth embodiment;
FIG. 5A is a perspective view of a suction cup 10 according to a sixth embodiment of the present invention, FIG. 5B is a perspective view of a spring element 16 according to the sixth embodiment, and FIG. 5C is a plan view of the spring element 16 according to the sixth embodiment;
FIGS. 6A and 6B are perspective views of a suction cup 10 according to a seventh embodiment of the present invention;
FIG. 7A is a perspective view of a suction cup 10 according to an eighth embodiment of the present invention, and FIG. 7B is a sectional plan view of the suction cup 10 according to the eighth embodiment;
FIG. 8A is a perspective view of a suction cup 10 according to a ninth embodiment of the present invention, and FIG. 8B is a perspective view of a spring element 16 according to the ninth embodiment;
FIG. 9A is a perspective view of a suction cup 10 according to a tenth embodiment of the present invention, and FIG. 9B is a perspective view of a suction cup 10 according to an eleventh embodiment of the invention; and
FIG. 10 is a sectional plan view of a suction cup in which a gel layer 22 is joined to a suction cup body 12.

### DETAILED DESCRIPTION OF THE PREFERRED EMBODIMENTS

### <First Embodiment>

Now, a first embodiment of the present invention will be described below referring to the drawings.

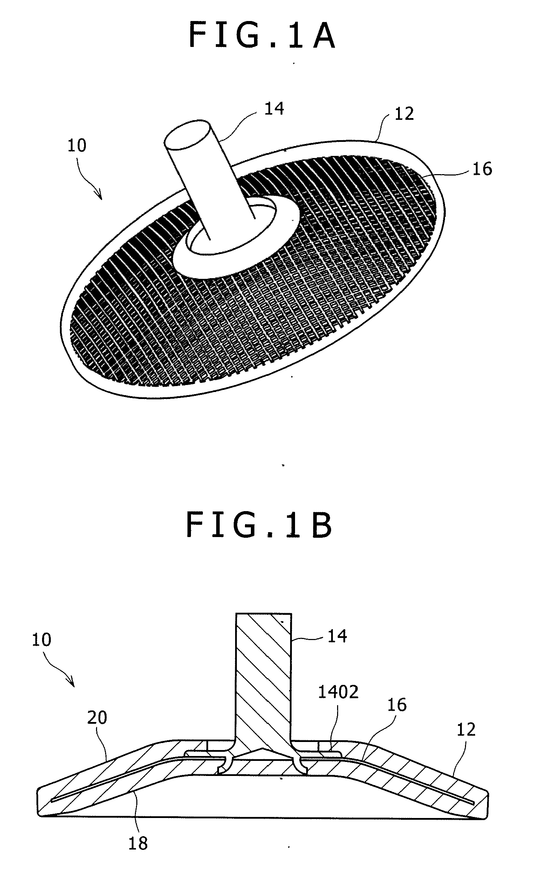

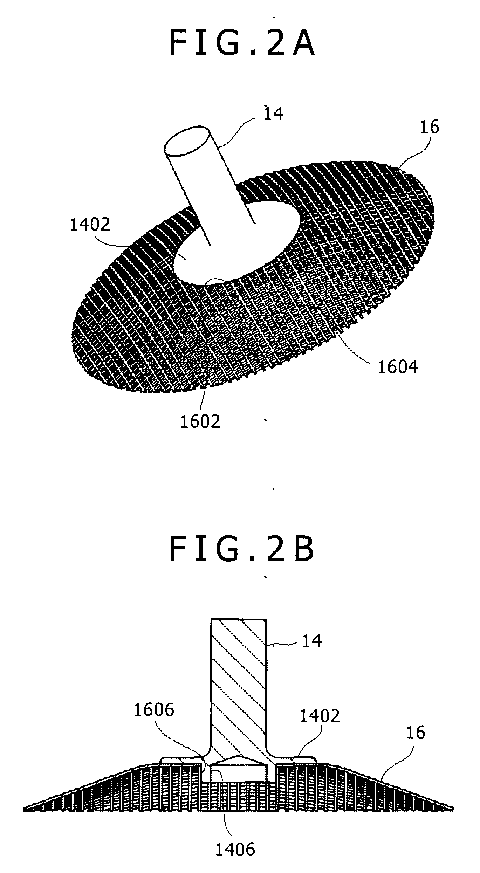

FIG. 1A is a perspective view of a suction cup 10 according to the first embodiment of the present invention, FIG. 1B is a sectional view of the same, FIG. 2A is a perspective view of a spring element 16, and FIG. 2B is a sectional view of the spring element 16.

The suction cup 10 shown in FIG. 1A is for supporting, for example, a display panel of a car navigation unit or a television unit on a dashboard in a compartment of an automobile, or for supporting an accessory such as a controller for remote control of various on-vehicle apparatuses.

As shown in FIGS. 1A and 1B, the suction cup 10 according to the first embodiment includes a suction cup body 12, a center shaft 14, and a spring element 16.

As shown in FIGS. 1A and 1B, the suction cup body 12 is plate-like in shape, specifically, circular disk-like in shape in this embodiment, and its surface on one side in the thickness direction is a concave suction surface 18 and its surface on the other side is a convex back surface 20.

The suction cup body 12 is formed from an elastic synthetic resin material. As the material, various known materials used for forming suction cups 10 can be used, for example, those materials based on urethane, styrene, or silicone resin.

Incidentally, though omitted in the figures, a piece for a detaching operation which extends outward in a radial direction of the suction cup body 12 is provided at the peripheral edge of the suction cup body 12.

In addition, the suction surface 18 may have any of various known configurations.

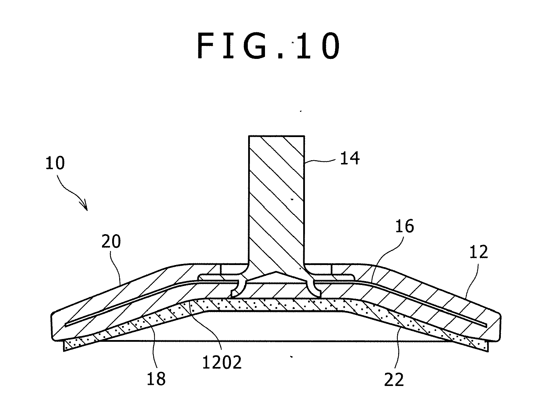

For example, as shown in FIG. 10, a gel layer 22 constituting a suction surface 18 may be joined to a circular disk-formed suction cup body 12 constituting a back surface 20.

In this case, the gel layer 22 is formed of a gel, a concave attaching surface 1202 is formed on the side of the suction cup body 12 opposite to the side of the back surface 20, the gel layer 22 is joined to the attaching surface 1202 so as to cover the attaching surface 1202, and the suction surface 18 is composed of the surface of the gel layer 22.

Examples of the gel which can be used here include synthetic resin gels based on polyethylene, styrene, silicone resin or the like. An example of the polyethylene based gel is commercially available under the product name "COSMO GEL" from Cosmo Instruments Co., Ltd. An example of the styrene based gel is commercially available under the product name "NAGFLEX" from Inoac Corporation. An example of the silicone based gel is commercially available under the product name "αGEL" (alpha gel) from Geltec Co., Ltd.

In addition, the joining of the gel layer 22 to the attaching surface 1202 may be carried out, for example, two-color molding, adhesion with an adhesive, or the like method.

When the suction surface 18 is configured by use of the gel layer 22, the suction surface 18 can be deformed following up to the ruggedness of the object surface to be sucked, even in the cases where the surface to be sucked is formed as a grained surface, a minutely rugged surface or a rough surface. Therefore, the suction surface 18 can make close contact with the rugged or rough surface, without leaving a gap between itself and the rugged or rough surface. Thus, the suction cup 10 is assuredly put into suction contact with a rugged or rough surface, which is advantageous in securely attaching various goods to a surface to be sucked, such as a grained surface of a dashboard panel.

As shown in FIG. 1B, the center shaft 14 is projected from a central part of the back surface 20 of the suction cup body 12 along the center axis 14 of the suction surface 18 and away from the back surface 20.

The center shaft 14 is formed from a metal or a hard synthetic resin. The center shaft 14 is provided at its lower end with a flange 1402, and the flange 1402 is embedded in a central part of the suction cup body 12.

The center shaft 14 is used for supporting, for example, a display panel of a car navigation unit or television unit on a dashboard in a compartment of an automobile, or for supporting, for example, a controller for remote control of various on-vehicle apparatuses.

The spring element 16 has a concave shape along the suction surface 18, is elastically deformable, and is used for energizing a central part of the suction surface 18 away from the surface to be sucked in the condition where the suction surface 18 is in suction contact with the surface to be sucked.

As shown in FIGS. 2A and 2B, the spring element 16 includes a central part 1602 located at a central part of the suction cup body 12, and an annular part 1604 located at an annular part, other than the central part, of the suction cup body 12.

The spring element 16, in this embodiment, includes a net-like member having a configuration in which an elastic thin bar member is fabricated into a net-like form having a concave shape corresponding to the suction surface 18.

The spring element 16 is embedded in the inside of the suction cup body 12, and the flange 1402 of the center shaft 14 and the spring element 16 are connected to each other.

In this embodiment, a hollow cylindrical wall 1406 is preliminarily formed at the lower surface of the flange 1402, and the spring element 16 is preliminarily provided in its center with a hole 1606 into which to insert the hollow cylindrical wall 1406. Then, as shown in FIG. 2B, the hollow cylindrical wall 1406 is inserted into the hole 1606. Thereafter, as shown in FIG. 1B, the hollow cylindrical wall 1406 is caulked so as to connect the lower end of the center shaft 14 and the central part of the spring element 16.

Examples of the material which can be used for the bar member for forming the spring element 16 include metals such as stainless steel. Or, alternately, the bar member may be formed from a non-metallic material such as carbon materials and fiber-reinforced plastics.

Now, the operation and effects of this embodiment will be described below.

First, by holding the accessory and the center shaft 14, the suction surface 18 of the suction cup body 12 is made to face the surface to be sucked. Then, the suction cup 10 is pressed against the surface to be sucked, and a substantially vacuum condition is formed between the suction surface 18 and the surface to be sucked, and the hand is put off the accessory.

When the hand is put off the accessory, the suction cup body 12 is left in suction contact with the surface to be sucked. In this condition, the central part of the suction cup body 12 tends to part from the surface to be sucked, due to its elasticity, whereby the degree of adhesion (close contact) of the suction cup 10 to the surface to be sucked is enhanced, and the accessory is securely attached to the surface to be sucked.

In this embodiment, the suction cup body 12 is provided therein with the spring element 16, the elasticity of the spring element 16 also acts on the suction cup body 12, in addition to the elasticity of the suction cup body 12 itself. Therefore, in the condition where the suction surface 18 is in suction contact with the surface to be sucked, the force tending to urge the central part of the suction cup body 12 away from the surface to be sucked is augmented, whereby the degree of adhesion (close contact) of the suction cup 10 to the surface to be sucked is enhanced, and the accessory is stably attached to the surface to be sucked.

This configuration is advantageous in enhancing the mechanical strength of the suction cup, as compared with the cases where the suction cup is formed from a single elastic material such as a rubber and polyvinyl chloride, as in the related art. Accordingly, this configuration is advantageous in keeping the shape of the suction cup and maintaining the adhering force (force of suction contact) for a long time, even in the cases where the suction cup is left to stand in the suction contact condition for a long time or is used in a high-temperature environment.

### <Second Embodiment>

Now, a second embodiment of the present invention will be described below.

FIG. 3A is a perspective view of a spring element 16 according to the second embodiment.

As shown in FIG. 3A, the spring element 16 according to the second embodiment has a configuration in which an elastic thin bar member 24 is spirally wound along a concave shape corresponding to a suction surface 18. The material forming the bar member 24 is the same as in the first embodiment above.

The method of using the spring element 16 is the same as in the first embodiment. A central part 1602 of the spring element 16 is connected to a flange 1402 provided at the lower end of a center shaft 14, and is embedded in the inside of a suction cup body 12 together with the lower end of the center shaft 14.

According to a suction cup 10 using the spring element 16 of the second embodiment thus configured, also, the same effects as in the first embodiment are obtained.

### <Third Embodiment>

Now, a third embodiment of the present invention will be described below.

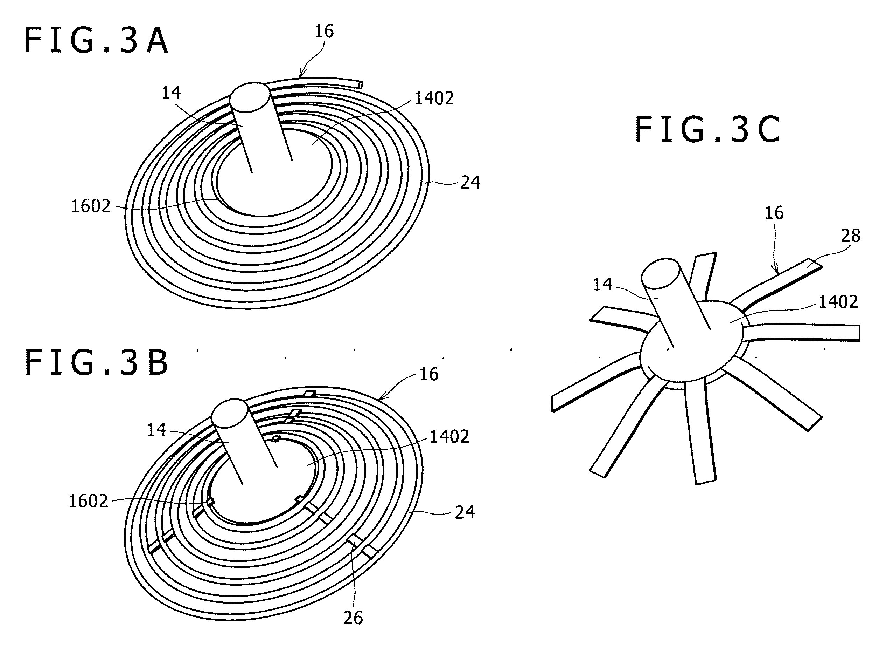

FIG. 3B is a perspective view of a spring element 16 according to the third embodiment.

As shown in FIG. 3B, the spring element 16 in the third embodiment has a configuration in which an elastic thin bar member 24 is spirally'wound along a concave shape corresponding to a suction surface 18, and, further, parts of the bar member 24 are connected by a plurality of thin bar members 26 extending in radial directions from a central part 1602 of the spring element 16.

The method of using the spring element 16 is the same as in the first embodiment above. A central part of the spring element 16 and the inner ends of the bar members 24 are connected to a flange 1402 provided at the lower end of a center shaft 14, and the spring element 16 is embedded in the inside of a suction cup body 12 together with the lower end of the center shaft 14.

According to the suction cup 10 using the spring element 16 of the third embodiment thus configured, also, the same effects as in the first embodiment are obtained.

### <Fourth Embodiment>

Now, a fourth embodiment of the present invention will be described below.

FIG. 3C is a perspective view of a spring element 16 according to the fourth embodiment.

As shown in FIG. 3C, the spring element 16 in the fourth embodiment includes a plurality of mutually separated pieces 28 formed from elastic thin plate member and extending radially from a central part of a suction cup body 12 toward the periphery of the suction cup body 12.

Examples of the material constituting the elastic plate member includes metals such as stainless steel. Or, alternately, the elastic thin plate member may be formed from a non-metallic material such as carbon materials and fiber-reinforced plastics.

The parts, located at a central part of the suction cup body 12, of the plurality of pieces 28 are connected to a flange 1402 provided at the lower end of a center shaft 14.

The method of using the spring element 16 is the same as in the first embodiment above. The spring element 16 is embedded in the inside of the suction cup body 12 together with the lower end of the center shaft 14.

According to a suction cup 10 using the spring element 16 of the fourth embodiment thus configured, also, the same effects as in the first embodiment are obtained.

### <Fifth Embodiment>

Now, a fifth embodiment of the present invention will be described below.

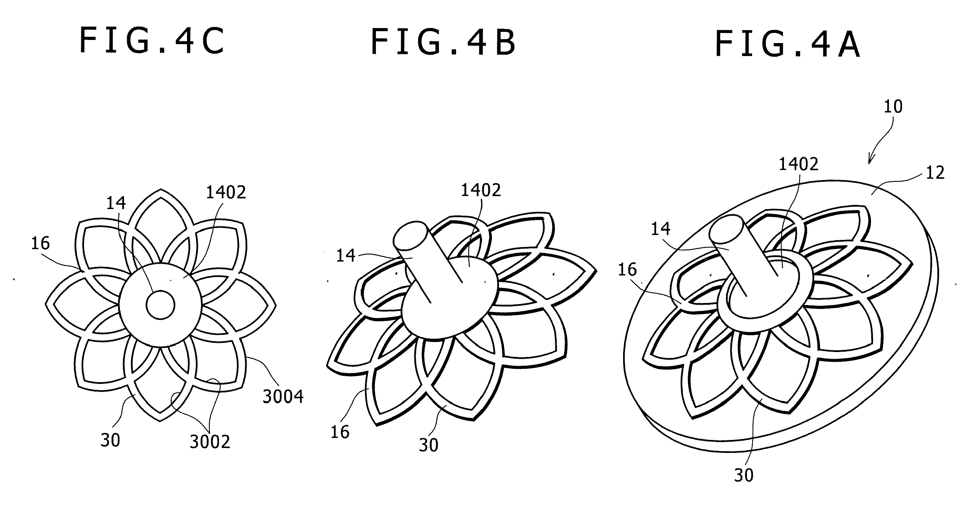

FIG. 4A is a perspective view of a suction cup 10 according to the fifth embodiment, FIG. 4B is a perspective view of a spring element 16 according to the fifth embodiment, and FIG. 4C is a plan view of the spring element 16 according to the fifth embodiment.

The spring element 16 has a piece 30 formed from an elastic thin plate member and extending in a concave shape along the shape of a suction surface 18. The material constituting the plate member is the same as in the fourth embodiment above.

The piece 30 includes a plurality of openings 3002, and small-width strips 3004 fringing the openings 3002. The piece 30 as a whole has a shape as if modeled after a flower in plan view.

The parts, located at a central part of a suction cup body 12, of the piece 30 are connected to a flange 1402 provided at the lower end of a center shaft 14.

The method of using the spring element 16 is the same as in the first embodiment above. The spring element 16 is embedded in the inside of the suction cup body 12 together with the lower end of the center shaft 14.

According to the suction'cup 10 using the spring element 16 of the fifth embodiment thus configured, also, the same effects as in the first embodiment are obtained.

Further, in this embodiment, when the suction cup body 12 is formed from a transparent elastic material, the shape of the spring element 16 can be visually recognized, which is advantageous in enhancing the aesthetic property of the suction cup 10. In this case, coloring the spring element 16 in, for example, red, yellow, green or the like is further advantageous in enhancing the aesthetic property of the suction cup 10.

### <Sixth Embodiment>

Now, a sixth embodiment of the present invention will be described below.

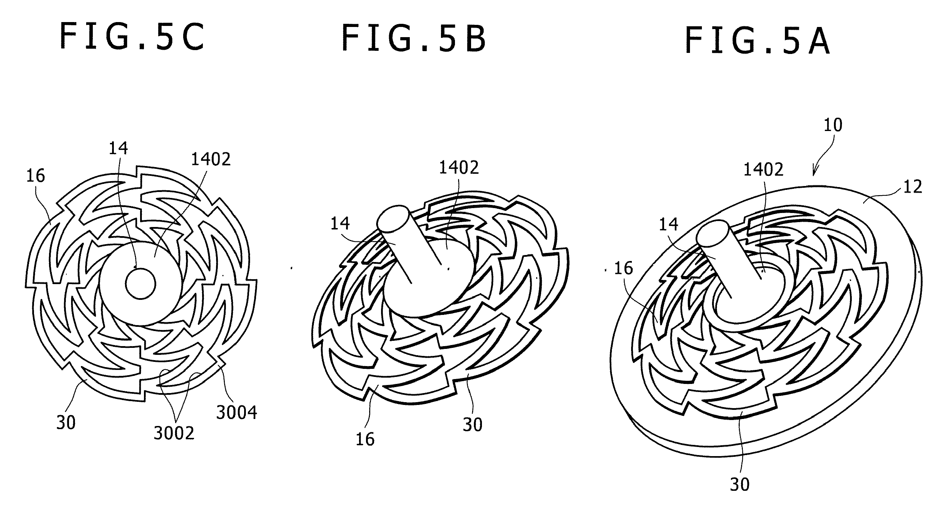

FIG. 5A is a perspective.view of a suction cup 10 according to the sixth embodiment, FIG. 5B is a perspective view of a spring element according to the sixth embodiment, and FIG. 5C is a plan view of the spring element 16 according to the sixth embodiment.

The spring element 16 has a piece 30 formed from an elastic thin plate member and extending in a concave shape along the shape of a suction surface 18. The material forming the plate member is the same as in the fourth embodiment above.

The piece 30 includes a plurality of openings 3002, and small-width strips 3004 fringing the openings 3002. The piece 30 as a whole has a shape as if modeled after a geometric pattern in plan view.

The parts, located at a central part of a suction cup body 12, of the piece 30 are connected to a flange 140 provided at the lower end of a center shaft 14.

The method of using the spring element 16 is the same as in the first embodiment above. The spring element 16 is embedded in the inside of the suction cup body 12 together with the lower end of the center shaft 14.

According to the suction cup 10 using the spring element 16 of the sixth embodiment thus configured, also, the same effects as in the first embodiment are obtained.

In addition, also in this embodiment, like in the fifth embodiment above, when the suction cup body 12 is formed from a transparent elastic material, the spring element 16 can be visually recognized, which is advantageous in enhancing the aesthetic property of the suction cup 10. In this case, coloring the spring element 16 in, for example, red, yellow, green or the like is more advantageous in enhancing the aesthetic property of the suction cup 10.

### <Seventh Embodiment>

Now, a seventh embodiment of the present invention will be described below.

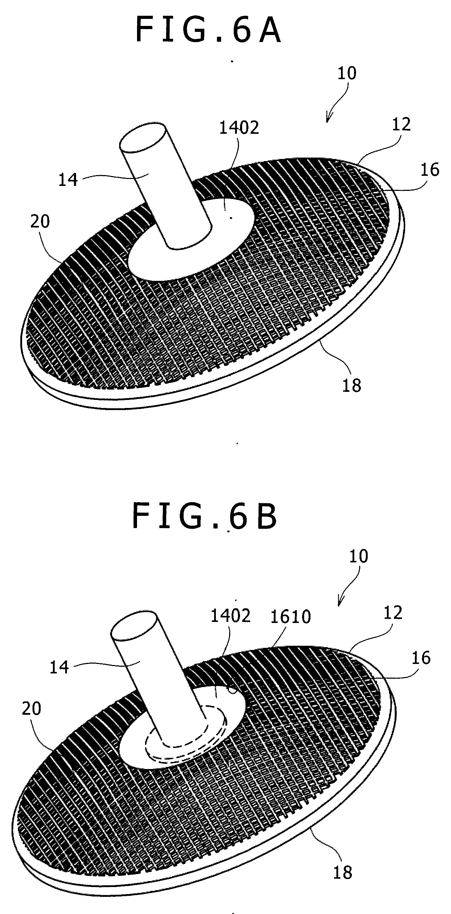

FIGS. 6A and 6B are perspective views of a suction cup 10 according to the seventh embodiment.

A spring element 16 shown in FIG. 6A has the same configuration as in the first embodiment above. Specifically, a flange 1402 provided at the lower end of a center shaft 14 and the spring element 16 including a net-like member are attached to a back surface 20 of a suction cup body 12.

According to the suction cup 10 using the spring element 16 of the seventh embodiment thus configured, also, the same effects as in the first embodiment above are obtained.

Like in the first embodiment, the spring element 16 shown in FIG. 6B includes the net-like member obtained by fabricating an elastic thin bar member into a net-like form having a concave shape corresponding to a suction surface 18. The material of the bar member is the same as in the first embodiment.

The spring element 16 is provided in its central part with a hole 1610 sized to be larger than the diameter of the center shaft 14, and, therefore, the spring element 16 is located at an annular part, other than a central part, of a suction cup body 12.

The spring element 16 is attached to the back surface 20 of the suction cup body 12, the flange 1402 formed at the lower end of the center shaft 14 is embedded in a central part of the suction cup body 12, and the center shaft 14 passes through the hole 1610 of the spring element 16, to protrude from the back surface 20 of the suction cup body 12.

According to the suction cup 10 using the spring element 16 of the seventh embodiment thus configured, also, the same effects as in the first embodiment above are obtained.

### <Eighth Embodiment>

Now, an eighth embodiment of the present invention will be described below.

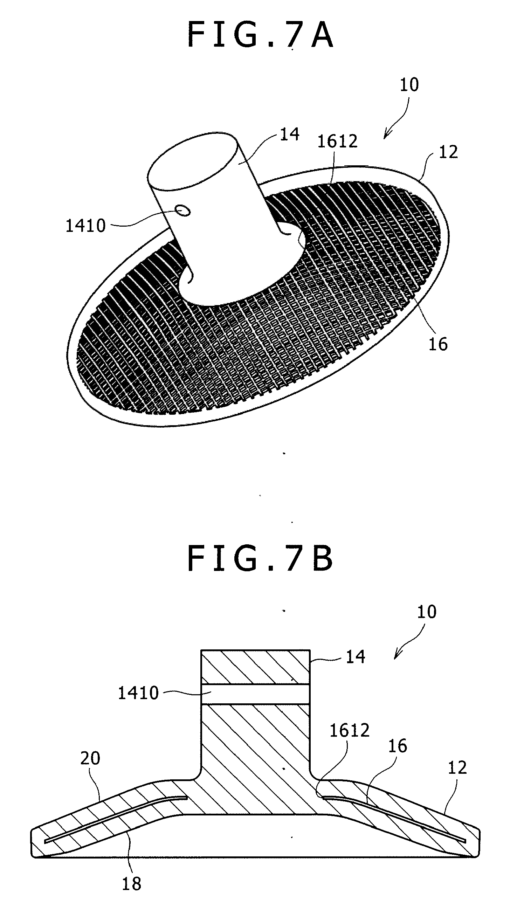

FIG. 7A is a perspective view of a suction cup 10 according to the eighth embodiment, and FIG. 7B is a sectional front view of the suction cup 10 according to the eighth embodiment.

As will be described below, the eighth to eleventh embodiments differ from the first to seventh embodiments above in that a center shaft 14 is formed as one body with a suction cup body 12.

More specifically, the center shaft 14 is projected from a central part of a back surface 20 of the suction cup body 12 along the center axis of a suction surface 18 and away from the back surface 20.

The center shaft 14 and the suction cup body 12 are integrally molded from the same material.

The center shaft 14 is provided therein with a hole 1410, and, for example, various goods may be supported through a strap or the like passed through the hole 1410.

Like in the seventh embodiment, the spring element 16 in this embodiment includes a net-like member obtained by fabricating an elastic thin bar member into a net-like form having a concave shape corresponding to the suction surface 18.

The spring element 16 is provided in its central part with a hole 1612 sized to be larger than the diameter of the center shaft 14, so that the spring element 16 is located at an annular part, other than a central part, of the suction cup body 12.

The spring element 16 is embedded in the inside of the suction cup body 12.

According to the suction cup 10 using the spring element 16 of the eighth embodiment thus configured, also, the same effects as in the first embodiment above are obtained.

### <Ninth Embodiment>

Now, a ninth embodiment of the present invention will be described below.

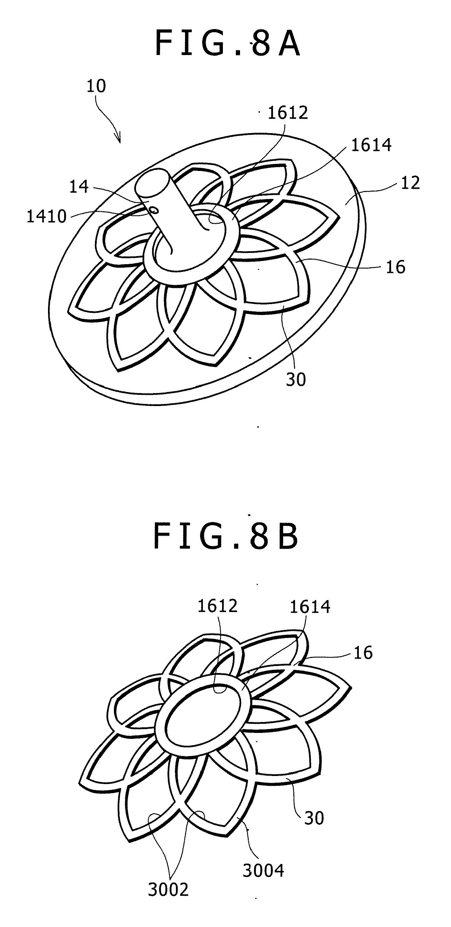

FIG. 8A is a perspective view of a suction cup 10 according to the ninth embodiment, and FIG. 8B is a perspective view of a spring element 16 according to the ninth embodiment.

The configuration of a suction cup body 12 is the same as in the eighth embodiment above, but the configuration of the spring element 16 is different from that in the eighth embodiment.

More specifically, the spring element 16 has a piece 30 including an elastic thin plate member and extending in a concave shape along the shape of a suction surface 18. The material constituting the plate member is the same as in the fourth embodiment above.

The spring element 16 is provided in its central part with a hole 1612 sized to be larger than the diameter of a center shaft 14.

The spring element 16 has an annular plate part 1614 surrounding the hole 1612, and a part connected to the annular plate part 1614 and located at an annular part, other than a central part, of the suction cup body 12.

The part, located at the annular part of the suction cup body 12, of the spring element 16 includes a plurality of openings 3002, and a small-width strip 3004 fringing the openings 3002, and has a shape as if modeled after a flower in plan view.

The spring element 16 is embedded in the inside of the suction cup body 12.

According to the suction cup 10 using the spring element 16 of the ninth embodiment thus configured, also, the same effects as in the first embodiment above are obtained.

Furthermore, in this embodiment, like in the fifth and sixth embodiments, when the suction cup body 12 is formed from a transparent elastic material, the shape of the spring element 16 can be visually recognized, which is advantageous in enhancing the aesthetic property of the suction cup 10. In this case, coloring the spring element 16 in, for example, red, yellow, green or the like is further advantageous in enhancing the aesthetic property of the suction cup 10.

### <Tenth Embodiment>

Now, a tenth embodiment of the present invention will be described below.

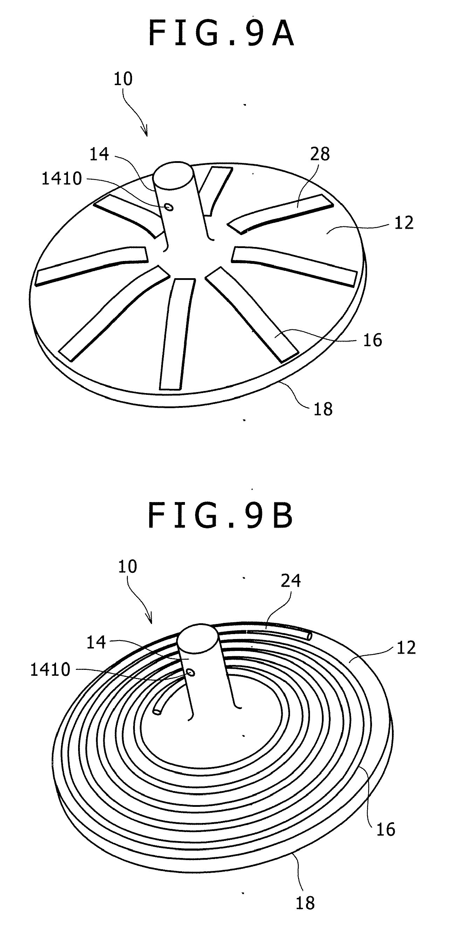

FIG. 9A is a perspective view of a suction cup 10 according to the tenth embodiment.

The configuration of a suction cup body 12 is the same as in the ninth embodiment above, but the configuration of a spring element 16 is different from that in the ninth embodiment.

The spring element 16 has a plurality of mutually separated pieces 28 including an elastic thin plate member and extending radially from a central part of the suction cup body 12 toward the periphery of the suction cup body 12. The material of the plate member is the same as in the fourth embodiment above.

The plurality of pieces'28 are embedded in the inside of the suction cup body 12.

According to the suction cup 10 using the spring element 16 of the tenth embodiment, also, the same effects as in the first embodiment above are obtained.

### <Eleventh Embodiment>

Now, an eleventh embodiment of the present invention will be described below.

FIG. 9B is a perspective view of a suction cup 10 according to the eleventh embodiment.

The configuration of a suction cup body 12 is the same as in the tenth embodiment, but the configuration of a spring element 16 is different from that in the tenth embodiment.

The spring element 16 in the eleventh embodiment has a configuration in which an elastic thin bar member 24 is wound spirally along a concave shape corresponding to a suction surface 18. The spring element 16 is embedded in an annular part, other than a central part, of the suction cup body 12. The material constituting the bar member 24 is the same as in the first embodiment.

According to the suction cup 10 using the spring element 16 of the eleventh embodiment thus configured, also, the same effects as in the first embodiment above are obtained.

It should be understood by those skilled in the art that various modifications, combinations, subcombinations and alterations may occur depending on design requirements and other factors insofar as they are within the scope of the appended claims or the equivalences thereof.

## Claims

1. A suction cup (10) comprising:
a suction cup body (12) formed from an elastic material and having a surface on one side in the thickness direction thereof as a concave suction surface (18); and
a spring element (16) provided as a part of said suction cup body (12), having a concave shape along said suction surface, and capable of elastic deformation such as to energize a central part of said suction surface (18) away from a surface to be sucked in the condition where said suction surface (18) is in suction contact with said surface to be sucked.

2. The suction cup (10) as set forth in claim 1,
wherein said spring element (16) has
a central part (1602) located at said central part of said suction cup body (12), and
an annular part (1604) located at an annular part, other than said central part, of said suction cup body (12) .

3. The suction cup (10) as set forth in claim 1,
wherein said spring element (16) is located at an annular part, other than a central part, of said suction cup body.

4. The suction cup (10) as set forth in claim 1, 2 or 3,
wherein said spring element (16) has a configuration in which an elastic thin bar member is fabricated into a net-like form having a concave shape corresponding to said suction surface.

5. The suction cup (10) as set forth in claim 1,
wherein said spring element (16) has a configuration in which an elastic thin bar member (24) is spirally wound into a shape corresponding to said suction surface (18).

6. The suction cup (10) as set forth in claim 1,
wherein said spring element (16) has a piece (30) including
an elastic thin plate member and extending along a concave shape corresponding to said suction surface; and
said piece has a plurality of openings (3002) and small-width strips (3004) fringing said openings.

7. The suction cup (10) as set forth in claim 1,
wherein said spring element (16) includes
a plurality of mutually separated pieces (28) each having
an elastic thin plate member and extending radially from a central part of said suction cup body (12) toward the periphery of said suction cup body (12).

8. The suction cup (10) as set forth in claim 1,
wherein said spring element (16) is embedded in the inside of said suction cup body (12).

9. The suction cup (10) as set forth in one of the claims 1 to 8,
wherein a surface on the other side in the thickness direction of said suction cup body (12) is a convex back surface (20); and
said spring element (16) is attached to said back surface (20).

10. The suction cup (10) as set forth in one of the claims 1 to 9,
wherein a surface on the other side in the thickness direction of said suction cup body (12) is a convex back surface (20); and
a center shaft (14) formed from a hard synthetic resin or metal and extending from a central part of said back surface (20) of said suction cup body (12) along the center axis of said suction surface (18) and away from said back surface (20), is projected.

11. The suction cup (10) as set forth in claim 10,
wherein the base end of said center shaft (14) is fixed in the state of being embedded in the inside of said suction cup body (12);
said spring element (16) is disposed in the state of being embedded in the inside of said suction cup body (12); and
said base end of said center shaft (14) and said spring element (16) are connected to each other.

12. The suction cup (10) as set forth in claim 10,
wherein the base end of said center shaft (14) is fixed in the state of being embedded in the inside of said suction cup body (12); and
said spring element (10) includes
a plurality of mutually separated pieces each having
an elastic thin plate member and extending radially from a central part of said suction cup body toward the periphery of said suction cup body.

13. The suction cup (10) as set forth in claim 10,
wherein the base end of said center shaft (14) and said spring element (16) are connected to each other; and
said base end of said center shaft (14) and said spring element (16) are attached to said back surface (20) of said suction cup body.

14. The suction cup (10) as set forth in claim 10,
wherein said center shaft (14) and said suction cup body (12) are integrally molded from the same material.

15. The suction cup (10) as set forth in one of the claims 1 to 14,
wherein said spring element is formed from a metal, a carbon material, or a fiber-reinforced plastic.

16. The suction cup (10) as set forth in one of the claims 1 to 15,
wherein said suction cup body (12) is formed from a transparent elastic material.

17. The suction cup (10) as set forth in one of the claims 1 to 16,
wherein said spring element (16) is colored.

18. The suction cup (10) as set forth in one of the claims 1 to 17,
wherein said suction cup body (12) includes a gel layer; and
said gel layer is formed from a gel and attached to said suction cup body so as to constitute said suction surface.
